## Europäisches Patentamt
## European Patent Office
## Office européen des brevets

(19)

(11) Veröffentlichungsnummer: **0 117 528**
**B1**

(12) # EUROPÄISCHE PATENTSCHRIFT

(45) Veröffentlichungstag der Patentschrift:
**31.05.89**

(51) Int. Cl.⁴: **G 01 N 30/00**, G 01 N 27/28,
G 01 N 27/46

(21) Anmeldenummer: **84101873.2**

(22) Anmeldetag: **22.02.84**

(54) **Verfahren und Vorrichtung zur elektrochemischen Detektion.**

(30) Priorität: **01.03.83 DE 3307154**

(43) Veröffentlichungstag der Anmeldung:
**05.09.84 Patentblatt 84/36**

(45) Bekanntmachung des Hinweises auf die Patenterteilung:
**31.05.89 Patentblatt 89/22**

(84) Benannte Vertragsstaaten:
**CH DE FR GB IT LI NL SE**

(56) Entgegenhaltungen:
DE-A-2 950 920

**I.E.C. PRODUCT RESEARCH AND DEVELOPMENT,
Band 20, Nr. 4, Dezember 1981, Washington, USA;
S.G. WEBER et al. "Electrochemical detectors in
liquid chromatography. A short review of detector
design", Seiten 593-598**
PATENT ABSTRACTS OF JAPAN, Band 5, Nr. 100,
27. Juni 1981, (P-68)(772); & JP-A-56-44836
**ANALYTICAL CHEMISTRY, Band 53, Nr. 1, Januar
1981, Easton, Pennsylvania, USA; W.A.
MACCREHAN "Differential pulse detection in
liquid chromatography and its application to the
measurement of organometal cations", Seiten 74-77
Vol. 2, ADV. ANAL. and CLINIC. CHEM., PLENUM,
NEW YORK, 1978, pp. 55-175**

(73) Patentinhaber: **Rall, Gerhard, Dipl.- Ing., Arzt,
Baaderstrasse 20, D-8000 München 5 (DE)**

(72) Erfinder: **Rall, Gerhard, Dipl.- Ing., Arzt,
Baaderstrasse 20, D-8000 München 5 (DE)**

(74) Vertreter: **Klunker, Hans- Friedrich, Dr.,
Patentanwälte Klunker . Schmitt- Nilson .
Hirsch Winzererstrasse 106, D-8000 München 40
(DE)**

## Beschreibung

Die Erfindung betrifft ein Verfahren und eine Vorrichtung zur elektrochemischen Detektion gemäß Oberbegriff des Patentanspruchs 1 bzw. 3.

Ein wichtiges Einsatzgebiet für die elektrochemische Detektion bzw. den elektrochemischen Detektor ist die Flüssigkeitschromatographie. Bei diesem Analyseverfahren wird die zu analysierende Substanz einer Trägerflüssigkeit, die von einer Pumpe geliefert wird zugegeben und die so entstehende Lösung auf eine analytische Säule gegeben. Diese Säule weist eine Retentionswirkung auf. Das heißt, verschiedene Substanzen des Probengemisches in der Lösung verweilen auf der Säule verschieden lange. Am Ausgang der Säule treten dann die einzelnen Substanzen des Probengemisches zeitlich nacheinander auf und können somit einzeln analysiert werden.

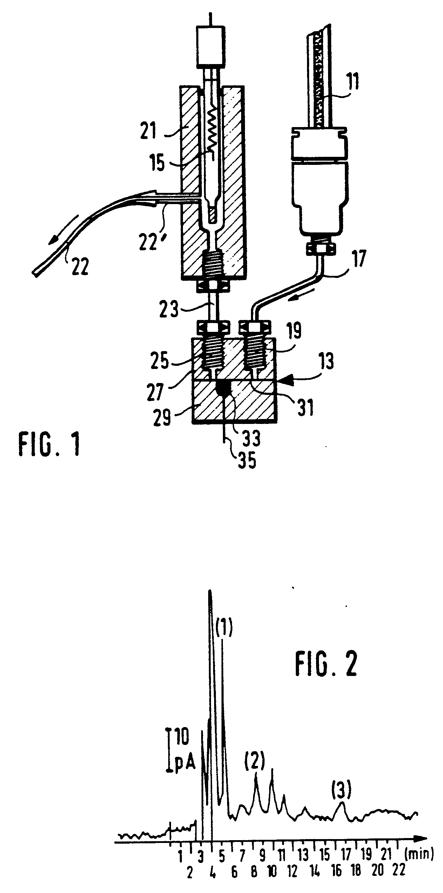

Die Analyse kann man mit Hilfe eines elektrochemischen Detektors durchführen, der zur Durchführung eines Verfahrens gemäß Oberbegriff des Anspruchs 1 geeignet ist und eine Detektorzelle mit einem Lösungsströmungsraum für die zu analysierende Elektrolytlösung aufweist. Vorzugsweise ist der Lösungsströmungsraum dieser Detektorzelle so aufgebaut, daß die durch ihn strömende Elektrolytlösung die Form einer Dünnschicht annimmt. Ein Beispiel einer derartigen chemischen Detektorzelle ist in Fig. 1 gezeigt, die der Schrift "Detectors for Trace Organic Analysis by Liquid Chromatography: Principles and Applications" aus Vol. 2 ADV. ANAL. and CLINIC. CHEM., PLENUM, NEW YORK, '78, S. 55 bis 175, entnommen ist. Die von der analytischen Säule kommende Elektrolytlösung wird über einen Kunststoffschlauch zu einem Einlaß geführt, durchläuft einen Dünnschicht-Lösungsströmungsraum in den eine Arbeitselektrode hineinreicht, und verläßt die Detektorzelle über einen Auslaß. Von dort gelangt die Elektrolytlösung über einen weiteren Kunststoffschlauch in ein Gehäuse mit einer Meßelektrode, mit der das elektrische Potential der Elektrolytlösung gemessen wird. Von diesem Gehäuse aus gelangt die Elektrolytlösung über eine Ablaufleitung zu einem Ablauf für die Elektrolytlösung. Ein Teil der Ablaufleitung ist dabei ein kurzes Metallrohrstück, das als Hilfselektrode verwendet wird, über die ein Potential auf die Elektrolytlösung aufgebracht wird. Die Hilfselektrode wird benötigt, weil die üblichen Meßelektroden stromunverträglich sind. Der Strom, der über die Arbeitselektrode infolge einer Oxidation oder Reduktion der Elektrolytlösung abfließt, wird somit über die Hilfselektrode zugeführt. Wie in der oben genannten Schrift ausgeführt ist, wird die zum Ionisieren der Elektrolytlösung erforderliche Potentialdifferenz zwischen der Elektrolytlösung und der Arbeitselektrode dadurch hergestellt, daß die Arbeitselektrode auf Massepotential gehalten wird und daß die Elektrolytlösung mit Hilfe der Hilfselektrode auf die erforderliche Potentialdifferenz gegenüber der Arbeitselektrode gebracht wird. Zu diesem Zweck wird mittels der Meßelektrode der elektrische Potentialmomentanwert der Elektrolytlösung gemessen und das Potential der Hilfselektrode mit Hilfe dieses Meßwertes auf die gewünschte Potentialdifferenz zwischen Elektrolytlösung und Arbeitselektrode geregelt.

Den bei der Oxidation oder der Reduktion an der Arbeitselektrode auftretenden Strom kann man, üblicherweise nach einer Strom-Spannung-Wandlung, auf den Eingang eines Meßwertschreibers geben. Dieser schreibt ein Chromatogramm, das einen bestimmten Grundsignalwert und daraus herausragende Peaks (Meßsignalspitzen) zeigt, deren Lage auf der Zeitachse des Chromatogramms von der Art und deren Höhe von der Konzentration der zu analysierenden Substanzen in der elektrolytischen Lösung abhängt. Dem Grundsignalwert ist eine Rausch- und Störspannung überlagert, deren Amplitude eine Auflösungsbegrenzung für das Chromatogramm darstellt. Daher werden große Anstrengungen gemacht, um den Rauschanteil des Grundwertsignals so niedrig wie möglich zu halten, um auch sehr geringe Substanzmengen analysieren zu können.

Aus "Journal of Chromatography", 213 (1981), Seiten 41 bis 46 ist es bekannt, die Referenz- oder Meßelektrode im Bereich der Arbeitselektrode anzuordnen.

Aus dem Artikel "Optimierung des Signal/Rausch-Verhältnisses bei der elektrochemischen Detektion der Katecholamine in Plasma- und Urinproben" von W. Bauersfeld und H. Wissner, erschienen in der Sammlung "Königsteiner Chromatographietage 4. bis 6. Oktober 1982, Travemünde/Ostsee" (Seminar der Firma Waters), ist es bekannt, zur Verringerung des Störanteils des Chromatogramms einerseits die Detektorzelle in einem Faraday-Käfig unterzubringen und andererseits für die Detektorelektronik ein zusätzliches Filter zu verwenden. Auf diese Weise ist man zu einer zuvor nicht erreichten Verringerung des Rauschens bis auf einen Spitze-Spitze-Wert von 2 pA$_{ss}$ vorgedrungen, wie das Chromatogramm in Fig. 2 zeigt, das der zuvor genannten Schrift entnommen ist.

In der Veröffentlichung I.E.C. Product Research and Development, Band 20, Dezember 1981, Nr. 4, Seiten 593 bis 598, wird eindringlich empfohlen, bei einem amperometrischen Detektor, der zur Analyse von Flüssigkeiten eingesetzt wird, in üblicher Weise das an seiner Arbeitselektrode anliegende Potential konstant zu halten, um sehr ernsthafte Störungen zu vermeiden. Allerdings sei es bisweilen auch vorteilhaft, das Arbeitselektroden potential während der Durchführung einer Analyse zu ändern, insbesondere impulsförmig. Dies jedoch für den Preis eines verschlechterten Signal/Rausch-Verhältnisses.

Der Erfindung liegt die Aufgabe zugrunde, ein Verfahren und eine Vorrichtung zur elektrochemischen Detektion verfügbar zu machen, mit denen sich der Störanteil im Chromatogramm noch wesentlich verringern und damit die Analyseempfindlichkeit deutlich erhöhen läßt.

Ein Verfahren zur Lösung dieser Aufgabe ist im Anspruch 1 angegeben und kann gemäß Anspruch 2 vorteilhaft weitergebildet werden. Ein elektrochemischer Detektor, der diese Aufgabe löst, ist im Anspruch 3 angegeben und kann gemäß den Ansprüchen 4 bis 21 vorteilhaft weitergebildet werden.

Der Erfindung liegt die Erkenntnis zugrunde, daß ein elektrochemischer Detektor der beschriebenen Art komplexen Störeinflüssen ausgesetzt ist, die insbesondere Erdschleifenprobleme, aber auch Störfeldeinstrahlungen und kapazitiv Einfluß nehmende elektrostatische Felder umfassen. Erdschleifenprobleme entstehen dadurch, daß verschiedene Komponenten des chromatographischen Systems unterschiedliches Massepotential aufweisen können, weil die an die Masseanschlüsse dieser Komponenten angeschlossenen Erdungsleiter verschiedenes Potential aufweisen können, beispielsweise aufgrund von thermoelektrischen Erscheinungen an Steckverbindern, Leitungsanschüsse usw. Da die durch das chromatographische System fließende Elektrolytlösung selbst als elektrischer Leiter wirkt, treten in dem Meßsystem Störspannungen auf, die zu einer störenden Beeinflussung der Differenz zwischen dem Potential der Arbeitselektrode und dem Potential der Elektrolytlösung im Bereich der Arbeitselektrode führen.

Erfindungsgemäß wird nun nicht mehr wie bisher das der Elektrolytlösung über die Hilfselektrode zugeführte Potential auf die gewünschte Potentialdifferenz gegenüber der Arbeitselektrode geregelt, sondern es wird einfach der elektrische Potentialmomentanwert der Elektrolytlösung im örtlichen Bereich der Arbeitselektrode gemessen und das Arbeitselektrodenpotential in Abhängigkeit von dem gemessenen Potentialmomentanwert gesteuert.

Es ist sehr viel besser möglich, das Potential der Arbeitselektrode einem schwankenden Elektrolytpotential nachzuführen als durch einen Regelvorgang Potentialschwankungen der Elektrolytlösung zu unterdrücken.

Dies wird vorzugsweise dadurch erreicht, daß dem gemessenen Potentialmomentanwert der Elektrolytlösung ein Potential entsprechend der für die Elektrolyse erforderlichen Potentialdifferenz überlagert wird und daß der Arbeitselektrode das resultierende Potential aufgeprägt wird.

Dies kann man auf technisch sehr einfache Weise erreichen, indem man den Ausgang der Meßelektrode mit einem Eingang einer Summierschaltung verbindet, die über einen zweiten Eingang mit einer Elektrolysepotentialdifferenzquelle verbunden ist, wobei der Ausgang der Summierschaltung mit der Arbeitselektrode verbunden ist, vorzugsweise über eine Strommeßeinrichtung.

Besonders bevorzugt wird eine Ausführungsform, die einen Strom-Spannung-Wandler aufweist, mit dessen Hilfe der von der Arbeitselektrode abgenommene Meßsignalwert in eine Meßsignalspannung umgewandelt wird, die dann auf den Eingang eines Chromatogramm-Schreibers gegeben wird. Für den Strom-Spannung-Wandler wird vorzugsweise ein als Differenzverstärker ausgebildeter Operationsverstärker verwendet, dessen nichtinvertierendem Eingang das Ausgangssignal der Summierschaltung zugeführt wird, dessen invertierender Eingang mit der Arbeitselektrode verbunden ist und dessen Ausgang über einen Rückkopplungswiderstand mit dem invertierenden Eingang verbunden ist. Das Ausgangssignal dieses Operationsverstärkers wird nach geeigneter Weiterverarbeitung auf den Eingang des Chromatogramm-Schreibers gegeben.

Man kommt mit besonders geringem technischem Aufwand aus, wenn man diesem Operationsverstärker eine Doppelfunktion zuordnet, nämlich einerseits die Funktion eines Strom-Spannung-Wandlers und andererseits die Funktion der Summierschaltung. Für diesen Zweck wählt oder bildet man den als Operationsverstärker dienenden Differenzverstärker so aus, daß er eine Offset-Spannung gleich der für die Elektrolyse erforderlichen Potentialdifferenz zwischen Arbeitselektrode und Elektrolytlösung aufweist. Für elektrochemische Detektoren, die fest für die Analyse bestimmter Substanzen eingerichtet sind, kann diese Offsetspannung einen konstanten Festwert darstellen. Ist der elektrochemische Detektor dagegen für wechselnden Einsatz zur Analyse verschiedener Substanzen oder Substanzgruppen gedacht, wird er vorteilhafterweise mit einer Einrichtung zur Einstellung der jeweils gewünschten Offsetspannung entsprechend der jeweils benötigten Potentialdifferenz zwischen Arbeitselektrode und Elektrolytlösung versehen.

Um einerseits die Elektrolytlösung in der gesamten Detektoranordnung auf möglichst konstantem Potential zu halten und um andererseits Einflüsse von Störfeldern und elektrostatischen Feldern abzuwehren, bildet man die Detektorzelle in besonders bevorzugter Weise mit einem den Einlaß und den Auslaß aufnehmenden metallischen Gehäuseblock aus und macht man die Einlaßzuleitung bis hin zur Lösungsquelle, vorzugsweise bis zur Pumpe, und vorzugsweise auch die Auslaßleitung, aus Metall. Um eine Flexibilität der Leitungen zu erhalten, kann man sie aus Kunststoffschläuchen herstellen, die außen oder innen mit Metall beschichtet sind oder mit einem metallischen Schirmgeflecht überzogen sind. Dabei verwendet man für die Einlaßzuleitung und die Auslaßleitung vorzugsweise dasselbe Metall wie für den Gehäuseblock, um Potentialsprünge zwischen dem Gehäuseblock und diesen Leitungen zu vermeiden.

In besonders bevorzugter Weise bildet man die Detektorzelle vollständig aus Metall aus, wobei die Arbeitselektrode und die Meßelektrode je in den sie aufnehmenden Gehäuseteil isoliert eingebettet sind, die Meßelektrode einschließlich des zu ihr gehörenden isolierenden Mantels, und die Arbeitselektrode, vorzugsweise auch die Meßelektrode, einschließlich ihrer Zuleitung mit einer Abschirmung versehen sind. Dann braucht man die Meßanordnung nicht in einem Faraday-Käfig anzuordnen, der platzraubend ist und den Zugang zu der Meßanordnung erschwert.

Für den Fall der Verwendung einer stromunverträglichen Meßelektrode besteht die Gegenelektrodenanordnung aus der Meßelektrode und der Hilfselektrode. Bei Verwendung einer strombelastbaren Meßelektrode kann die Gegenelektrodenanordnung ausschließlich aus der Meßelektrode bestehen und kann die Hilfselektrode wegfallen.

Im folgenden werden die Erfindung sowie Weiterbildungen und Ausgestaltungen der Erfindung anhand von Ausführungsformen näher erläutert. In den Zeichnungen zeigt

Fig. 1    den bereits erwähnten herkömmlichen elektrochemischen Detektor;

Fig. 2    das bereits erwähnte, mit einem herkömmlichen elektrochemischen Detektor erhaltene Chromatogramm;

Fig. 3    eine Ausführungsform einer erfindungsgemäßen Vorrichtung zur elektrochemischen Detektion;

Fig. 4    eine Ausführungsform eines erfindungsgemäßen elektrochemischen Detektors mit abgewandelter Detektorzelle; und

Fig. 5    ein mit der erfindungsgemäßen Vorrichtung zur elektrochemischen Detektion erhaltenes Chromatogramm.

Der in Fig. 1 gezeigte herkömmliche elektrochemische Detektor weist eine Detektorzelle 13 und eine Meßelektrode 15 auf. Eine analytische Säule 11 ist mittels einer Einlaßzuleitung 17 auf Kunststoff mit einem Einlaß 19 der Detektorzelle 13 verbunden. Die Meßelektrode 15 ist in einem Meßelektrodengehäuse 21 untergebracht, mit dem ein Auslaß 25 der Detektorzelle 13 über eine Auslaßleitung 23 aus Kunststoff verbunden ist. Das Meßelektrodengehäuse 21 weist eine Auslaßleitung 22 auf, von der ein kurzes Stück 22' als Metallrohr ausgebildet ist, das als Hilfselektrode dient.

Die Detektorzelle 13 besteht aus zwei Gehäuseteilen 27 und 29 aus Kunststoff, zwischen denen ein Lösungsströmungsraum 31 gebildet ist. In diesen münden in einem Abstand voneinander der Einlaß 19 und der Auslaß ein, die in dem oberen Gehäuseteil 27 gebildet sind. In den unteren Gehäuseteil 29 ist eine Arbeitselektrode 33 eingebettet, die in den Lösungsströmungsraum 31 hineinreicht und mit der durch den Lösungsströmungsraum 31 strömenden Elektrolytlösung in elektrischem Kontakt ist. Der Lösungsströmungsraum 31 ist so aufgebaut, daß die durch ihn strömende Elektrolytlösung die Form einer Dünnschicht annimmt. An die Arbeitselektrode 33 ist eine elektrische Zuleitung 35 angeschlossen.

Im Betrieb wird die Arbeitselektrode auf Massepotential gehalten und es wird der Elektrolytlösung mit Hilfe der Hilfselektrode 22' ein Potential aufgeprägt, so daß die Elektrolytlösung die zur elektrochemischen Detektion erforderliche Potentialdifferenz gegenüber dem Arbeitselektrodenpotential aufweist. Das Potential der Elektrolytlösung wird mit der Meßelektrode 15 gemessen und mit der Hilfselektrode 22' auf den Sollwert geregelt.

Der an der Arbeitselektrode 33 auftretende Strom wird nach einer Verarbeitung, insbesondere einer Strom-Spannung-Wandlung, einer veränderbaren Verstärkung und einer Filterung, auf den Eingang eines Chromatogramm-Schreibers gegeben.

Auf ihrem Weg von der Säule 11 bis zur Hilfselektrode 22' kann die Elektrolytlösung zahlreichen Störungen ausgesetzt werden. Üblicherweise weisen die Säule 11 und die ihr vorgeschaltete Pumpe ein Metallgehäuse auf. Aus Sicherheitsgründen sind deren Gehäuse geerdet. Aufgrund der bereits erwähnten Probleme können die Massepotentiale, auf denen die Pumpe, die Säule 11 und die Arbeitselektrode 33 liegen, verschieden sein. Die als elektrischer Leiter wirkende Elektrolytlösung ist daher einem Potentialgemisch ausgesetzt, aufgrunddessen das Potential der Elektrolytlösung im Bereich der Arbeitselektrode 33 von dem Potential der Elektrolytlösung im Bereich der Meßelektrode und dieses wieder vom Potential der Elektrolytlösung im Bereich der Hilfselektrode 22' verschieden sein kann. Schwankungen des Elektrolytpotentials am Ort der Meßelektrode 15 können daher verschieden sein von den Schwankungen des Elektrolytpotentials am Ort der Arbeitselektrode 33. Dies hat zur Folge, daß die Elektrolytlösung im Bereich der Arbeitselektrode 33 ein anderes Potential aufweist als im Bereich der Meßelektrode 15, deren Potential mit der Hilfselektrode 22' geregelt wird. Dies verursacht dem Grundsignal des Chromatogramms überlagerte Störungen.

Außerdem können Hochfrequenzfelder und von aufgeladenen Gegenständen oder Personen stammende elektrostatische Felder auf die Elektrolytlösung einwirken, während sie aus der Säule 11 durch die Kunststoff-Einlaßzuleitung 17, das Kunststoffgehäuse des Detektors 13 und die Kunststoff-Auslaßleitung 23 zur Meßelektrode 15 und von dort weiter zur Hilfselektrode 22' fließt. Letztere Störungen machen es erforderlich, daß herkömmliche elektrochemische Detektoren in Faraday-Käfigen betrieben werden müssen.

Fig. 2 zeigt das bereits erwähnte, mit einer herkömmlichen elektrochemischen Detektorvorrichtung erhaltene Chromatogramm. Dieses Chromatogramm zeigt über die Zeitachse verteilt drei Peaks, von denen Peak (1) von 22 pg Noradrenalin, Peak (2) von 7 pg Adrenalin und Peak (3) von 5 pg Dopamin stammt. Anhand des ins Chromatogramm eingezeichneten Ordinatenmaßstabs von 10 pA/cm kann man erkennen, daß dem Grundsignalwert dieses Chromatogramms ein Rausch- und Störsignal mit einem Spitze-Spitze-Wert von etwa 2 pA$_{ss}$ überlagert ist.

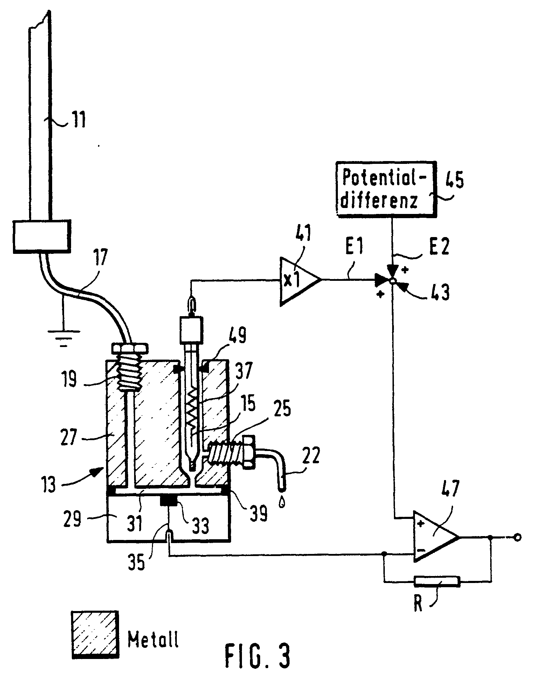

Eine erste Ausführungsform einer erfindungsgemäßen Vorrichtung zur elektrochemischen Detektion ist in Fig. 3 gezeigt. In dieser sind Komponenten, die mit Komponenten in Fig. 1 übereinstimmen, mit gleichen Bezugszeichen gekennzeichnet. Die Betriebsweise ist die gleiche wie bei dem elektrochemischen Detektor in Fig. 1, sofern nachfolgend nichts anderes angegeben ist.

Der in Fig. 3 dargestellte elektrochemische Detektor weist eine Detektorzelle 13 auf, deren (in der Figur) oberer Gehäuseteil 27 aus einem Metallblock besteht, in den sowohl der Einlaß 19 als auch der Auslaß 25 münden. Außerdem weist der Metallblock 27 eine Meßelektrodenöffnung 37 auf, in welche die Meßelektrode 15 so eingesetzt ist, daß sich ihr Meßende in der Nähe des Lösungsströmungsraumes 31 befindet. Die Einlaßzuleitung 17 und auch die Auslaßleitung 22 bestehen aus Metallröhren. Für diese Metallröhren wird vorzugsweise das gleiche Material wie für den Metallblock 27 gewählt, um Potentialsprünge an den Übergangsstellen zwischen den Metallröhren und dem Metallblock zu vermeiden.

Das in Fig. 3 untere Gehäuseteil 29 besteht aus einem Kunststoffblock, der mit Hilfe einer als Abstandsstück wirkenden Dichtung 39 in einem Abstand vom metallischen oberen Gehäuseteil 27 gehalten wird, um zwischen diesen beiden Gehäuseteilen 27 und 29 den Lösungsströmungsraum 31 zu bilden.

Ein sehr wichtiger Gesichtspunkt der Erfindung ist nun der, daß die Hilfselektrode, gebildet durch die metallische Einlaßzuleitung 17 und die mit ihr verbundenen Metallteile der Anordnung, nicht dazu benutzt wird, die Elektrolytlösung auf eine Potentialdifferenz gegenüber der Arbeitselektrode 33 zu regeln, sondern daß die Hilfselektrode auf ein Referenzpotential, wie Massepotential gelegt wird. Mit der Meßelektrode 15 wird das Potential der Elektrolytlösung in der Nähe der Arbeitselektrode 33 gemessen und der gemessene Wert wird über einen Impedanzwandler 41 auf einen ersten Eingang E1 einer Summierschaltung 43 gegeben. An diesem Eingang E1 ist der jeweilige Potentialmomentanwert der Elektrolytlösung am Ort der Meßelektrode 15 verfügbar. Ein zweiter Eingang E2 der Summierschaltung 43 ist mit dem Ausgang einer Spannungsquelle 45 verbunden, die eine Spannung entsprechend der für die Elektrolyse erforderlichen Potentialdifferenz liefert. D. h. die Spannungsquelle 45 liefert eine Spannung, die der gewünschten Differenz zwischen dem Potential der Elektrolytlösung im Bereich der Arbeitselektrode 33 und dem Potential der Arbeitselektrode 33 selber entspricht. Der Ausgang der Summierschaltung 43 wird daher immer auf einen Spannungswert gesteuert, der um die Potentialdifferenz über dem jeweiligen Momentanwert des Elektrolytpotentials im Bereich der Arbeitselektrode 33 liegt.

Der Ausgang der Summierschaltung 43 ist mit den nicht-invertierenden Eingang eines Operationsverstärkers 47 verbunden, dessen invertierender Eingang mit der Zuleitung 35 der Arbeitselektrode 33 verbunden ist. Der Ausgang des Operationsverstärkers 47 ist über einen Widerstand R auf dessen invertierenden Eingang rückgekoppelt. Aufgrund des bekannten Verhaltens eines derart rückgekoppelten Operationsverstärkers stellt sich an dessen nichtinvertierendem Eingang das gleiche Potential wie an dessen invertierendem Eingang ein. Daher liegt auch an der Arbeitselektrode 33 das am Ausgang der Summierschaltung 43 auftretende Potential. Somit wird das Potential der Arbeitselektrode 33 zu jedem Zeitpunkt auf einen Wert gesteuert, der um die Potentialdifferenz von der Spannungsquelle 45 über dem Potentialmomentanwert der Elektrolytlösung im örtlichen Bereich der Arbeitselektrode 33 liegt. Schwankungen der Absolutwertes des Elektrolytpotentials können sich nicht mehr schädlich auswirken, da der Absolutwert des Potentials der Arbeitselektrode 33 entsprechend schwankend gesteuert wird, d. h. die Potentialdifferenz zwischen Elektrolytpotential und dem Arbeitselektrodenpotential jedoch auf konstantem Wert gehalten wird.

An der Arbeitselektrode 33 tritt ein elektrischer Strom auf, der von der jeweiligen momentanen Elektrolysierbarkeit der an der Arbeitselektrode 33 vorbeiströmenden Elektrolytlösung abhängt. Mit Hilfe des als Strom-Spannung-Wandler dienenden Operationsverstärkers 47 wird der von der Arbeitselektrode 33 gelieferte Strom in eine entsprechende Spannung umgewandelt, die am Ausgang des Operationsverstärkers 47 zur Verfügung steht. Diese Ausgangsspannung des Operationsverstärkers 47 wird nach geeigneter Weiterverarbeitung, insbesondere einer Weiterverstärkung, Potentialanpassung und Filterung auf den Eingang eines Chromatogrammschreibers gegeben.

Dadurch, daß die Einlaßzuleitung 17, die Auslaßleitung 22 und der den Einlaß 19, den Einlaß 25 und die Meßelektrode 15 enthaltende Gehäuseteil 27 aus Metall bestehen, wird nicht nur die Elektrolytlösung während ihres gesamten Strömungsweges vom Ausgang der Säule 11 bis zum Ausgang der Auslaßleitung 22 auf praktisch gleichem Potential gehalten, sondern wird auch eine wirksame Abschirmung gegenüber Hochfrequenz-Störfeldern und elektrostatischen Störfeldern erreicht.

Gemäß einer besonders vorteilhaften Weiterbildung der Erfindung kann man auch den (in Fig. 3) unteren Gehäuseteil 29 aus Metall machen, und zwar vorzugsweise aus dem gleichen Metall, aus dem der obere Gehäuseteil 27 besteht. Dabei werden dann die Arbeitselektrode 33 und deren Zuleitung 35 in dem unteren Gehäusemetallblock elektrisch isoliert gehalten. Vorzugsweise wird man dann die Arbeitselektrode 33 und auch die Meßelektrode 15, je einschließlich der Zuleitung, mit einer Abschirmung versehen. Beispielsweise wird man die Zuleitung 35 der Arbeitselektrode 33 als abgeschirmtes Kabel ausführen und die Abschirmung dieses Kabels mit dem metallischen Gehäuseteil 29 verbinden. Bei dieser Ausführungsform der Erfindung kann man auf einen abschirmenden Faraday-Käfig gänzlich verzichten.

Um die Abschirmung möglichst perfekt zu halten, führt man die metallische Einlaßzuleitung 17 bis in das Metallgehäuse der Säule 11. Weist die Säule 11 und/oder die der Säule 11 vorgeschaltete Pumpe in ihrem Metallgehäuse eine Elektrolytleitung aus Kunststoff auf, stellt man vorteilhafterweise zwischen der metallischen Einlaßzuleitung 17 und dem Metallgehäuse der Säule 11 und gegebenenfalls der Pumpe eine elektrische Verbindung her.

Die Meßelektrode ist üblicherweise in einem isolierenden Mantel angeordnet, der am Meßende der Meßelektrode mit einer ionendurchlässigen Membran abgeschlossen ist. Daher braucht man in dem metallischen Gehäuseteil 27 lediglich eine Öffnung 37 für die Meßelektrodenanordnung vorzusehen und zwischen der Meßelektrodenanordnung und der Meßelektrodenöffnung eine Dichtung 49 vorzusehen.

Bei dem in Fig. 3 gezeigten elektrochemischen Detektor treten bei Stromfluß in der Arbeitselektrode 33 in der durch den Lösungsströmungsraum 31 strömenden Elektrolytlösung Äquipotentialflächen auf, die näherungsweise parallel zu der oberen und der unteren Begrenzungsfläche dem Lösungsströmungsraum 31 verlaufen. Die an die Arbeitselektrode 33 angrenzende Elektrolytlösung liegt daher auf einem anderen Potential als die an der Meßelektrode 15 vorhandene Elektrolytlösung.

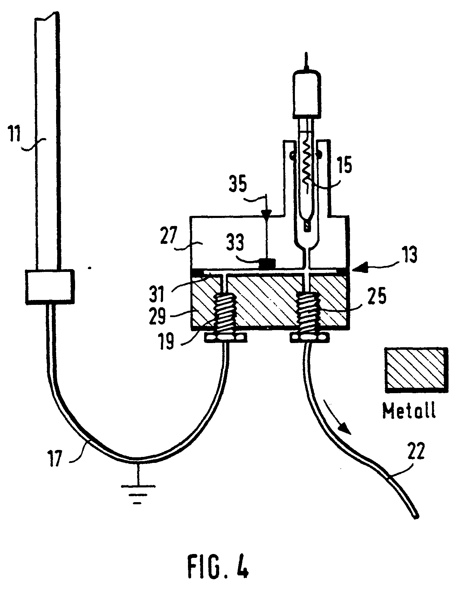

Fig. 4 zeigt eine Ausführungsform des erfindungsgemäßen elektrochemischen Detektors, bei der die Arbeitselektrode 33 und eine Verbindung zur Meßelektrode 15 beide im oberen Gehäuseteil 27 und der Einlaß 19 und der Auslaß 25 im unteren Gehäuseteil 29 untergebracht sind. Die im Bereich der Arbeitselektrode 33 vorhandene und die im Bereich der Zuleitung zur Meßelektrode 15 vorhandene Elektrolytlösung liegen bei dieser Ausführungsform praktisch auf der gleichen Äquipotentialfläche, so daß hier noch eine Verbesserung gegenüber der in Fig. 3 gezeigten Ausführungsform erreicht wird.

Ansonsten besteht im wesentlichen Übereinstimmung mit der Ausführungsform nach Fig. 3. Auch in diesem Fall ist die Arbeitselektrode 33 mit dem invertierenden Eingang des Operationsverstärkers 47 verbunden und ist die Meßelektrode 15 an den Impedanzwandler 41 angeschlossen.

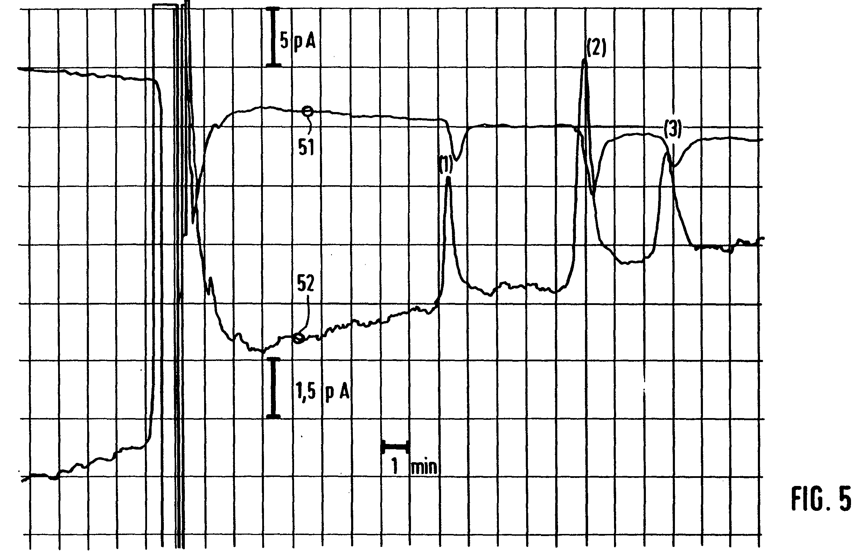

Fig. 5 zeigt ein Chromatogramm, das mit Hilfe des erfindungsgemäßen Verfahrens und einer erfindungsgemäßen Vorrichtung zur elektrochemischen Detektion aufgenommen worden ist. Dieses Chromatogramm zeigt zwei Meßkurven 51 und 52, die beide auf dasselbe Meßsignal zurückgehen, jedoch mit einer unterschiedlichen Aufzeichnungsempfindlichkeit hergestellt worden sind. Die Empfindlichketsmaßstäbe sind über bzw. unter der Meßkurve 51 und 52 dargestellt.

Die Kurven 51 und 52 zeigen je einen Peak (1), der von 2,3 pg Noradrenalin stammt, einen Peak (2), der von 5,2 pg Di-Hydroxy-Benzylamin verursacht worden ist, und einen Peak (3), der auf 3,46 pg Adrenalin zurückgeht. Obwohl die Konzentrationen viel geringer sind als bei dem Chromatogramm in Fig. 1, erheben sich diese Peaks viel Stärker aus dem Grundrauschen heraus als in Fig. 1. Wie ein Vergleich der unteren Kurve 52 mit dem für sie angegebenen Empfindlichkeitsmaßstab zeigt, weisen die Stör- und Rauschanteile, die dem Grundsignal dieses Chromatogramms überlagert sind, Spitze-Spitze-Werte von etwa 0,2 bis 0,3 $pA_{ss}$ auf. Dies stellt gegenüber dem in Fig. 2 gezeigten Chromatogramm, das mit einem herkömmlichen Verfahren und einer herkömmlichen Vorrichtung zur elektrochemischen Detekton aufgenommen worden ist, eine Verbesserung um einen Faktor von mehr als 6 dar. Mit der erfindungsgemäßen Methode und der erfindungsgemäßen Detektorvorrichtung können also wesentlich geringere Konzentrationen analysiert werden als bisher.

## Patentansprüche

1. Verfahren zur elektrochemischen Detektion von in Elektrolytlösungen enthaltenen Substanzen mit Hilfe eines elektrochemischen Detektors, der eine Detektorzelle (13) aufweist mit einem Einlaß (19) und einem Auslaß (25) für eine Elektrolytlösung, mit einer Arbeitselektrode (33), die sich in Kontakt mit der durch einen Lösungsströmungsraum (31) strömenden Elektrolytlösung befindet, und mit einer Gegenelektrodenanordnung (15), mit deren Hilfe eine für die Elektrolyse erforderliche Potentialdifferenz zwischen Arbeitselektrode (33) und Elektrolytlösung eingestellt wird, wobei der

elektrische Potentialmomentanwert der Elektrolytlösung im örtlichen Bereich der Arbeitselektrode (33) mittels der Gegenelektrodenanordnung (15) gemessen und der an der Arbeitselektrode entstehende Elektrolysestrom als Detektionsmeßwert abgenommen wird, dadurch gekennzeichnet, daß das Arbeitselektrodenpotential auf die für die Elektrolyse erforderliche Potentialdifferenz gegenüber dem gemessenen Potentialmomentanwert der Elektrolytlösung gesteuert wird.

2. Verfahren nach Anspruch 1, dadurch gekennzeichnet, daß dem gemessenen Potentialmomentanwert der Elektrolytlösung ein Potential entsprechend der für die Elektrolyse erforderlichen Potentialdifferenz überlagert wird und daß der Arbeitselektrode (33) das aus der Überlagerung resultierende Potential aufgeprägt wird.

3. Elektrochemischer Detektor mit einer Detektorzelle (13), die einen Einlaß (19) und einen Auslaß (25) für eine Elektrolytlösung aufweist, ferner eine Arbeitselektrode (33), die sich in Kontakt mit der durch einen Lösungsströmungsraum (31) strömenden Elektrolytlösung befindet, eine Gegenelektrodenanordnung (15), mit deren Hilfe der elektrische Potentialmomentanwert der Elektrolytlösung im örtlichen Bereich der Arbeitselektrode (33) gemessen und zwischen Elektrolytlösung und Arbeitselektrode (33) eine elektrische Potentialdifferenz einstellbar ist, welche die Elektrolyse der zu detektierenden Substanz, die sich in der an der Arbeitselektrode (33) vorbeiströmenden Elektrolytlösung befindet, bewirken kann, mit einer elektrischen Schaltung (41, 43, 45) zur Einstellung der für die Elektrolyse erforderlichen Potentialdifferenz zwischen Arbeitselektrode (33) und Elektrolytlösung und mit einer elektrischen Meßschaltung zur Messung des an der Arbeitselektrode (33) entstehenden Elektrolysestroms, zur Durchführung des Verfahrens nach Anspruch 1, dadurch gekennzeichnet, daß die Gegenelektrodenanordnung (15) mit einem ersten Eingang (E1) einer Summierschaltung (43) verbunden ist, die einen zweiten Eingang (E2) aufweist, der mit dem Ausgang einer Spannungsquelle (45), die eine Spannung entsprechend der für die Elektrolyse erforderlichen Potentialdifferenz liefert, verbunden ist, und deren Ausgang mit der Arbeitselektrode (33) verbunden ist.

4. Elektrochemischer Detektor nach Anspruch 3, dadurch gekennzeichnet, daß der Ausgang der Summierschaltung (43) über eine Strommeßeinrichtung (47, R) mit der Arbeitselektrode (33) verbunden ist.

5. Elektrochemischer Detektor nach Anspruch 4 dadurch gekennzeichnet, daß der Ausgang der Summierschaltung (43) an den nicht-invertierenden Eingang eines Operationsverstärkers (47) angeschlossen ist, dessen invertierender Eingang einerseits mit der Arbeitselektrode (33) und andererseits über einen Rückkopplungswiderstand (R) mit dem Ausgang des Operationsverstärkers (47) verbunden ist und daß das Ausgangssignal des Operationsverstärkers (47) als Detektionsmeßspannung abnehmbar ist.

6. Elektrochemischer Detektor nach einem der Ansprüche 3 bis 5, dadurch gekennzeichnet, daß die Summierschaltung durch einen Differenzverstärker gebildet ist, dessen nichtinvertierender Eingang mit der Gegenelektrodenanordnung (15) verbunden ist und der für eine Offsetspannung gleich der für die Elektrolyse erforderlichen Potentialdifferenz zwischen Arbeitselektrode (33) und Elektrolytlösung ausgelegt ist.

7. Elektrochemischer Detektor nach Anspruch 6, dadurch gekennzeichnet, daß der Operationsverstärker durch den Differenzverstärker (47) gebildet ist.

8. Elektrochemischer Detektor nach einem der Ansprüche 3 bis 7, dadurch gekennzeichnet, daß zwischen die Gegenelektrodenanordnung (15) und die Summierschaltung (43) ein Impedanzwandler (41) geschaltet ist.

9. Elektrochemischer Detektor nach einem der Ansprüche 3 bis 8, dadurch gekennzeichnet, daß die Gegenelektrodenanordnung eine Hilfselektrode (17, 22, 27) und eine Meßelektrode (15) aufweist, daß die Hilfselektrode (17, 22, 27) mit einem Bezugspotential für die Elektrolytlösung beaufschlagbar ist und daß die Meßelektrode (15) mit der Summierschaltung (43) verbunden ist.

10. Elektrochemischer Detektor nach einem der Ansprüche 3 bis 9, dadurch gekennzeichnet, daß die Detektorzelle durch ein mit dem Lösungsströmungsraum (31) versehenes Gehäuse (27, 29) gebildet ist, das einen Einaß (19) und einen Auslaß (25) aufweist, die mit dem Lösungsströmungsraum (31) in Verbindung stehen, und in dessen Lösungsströmungsraum (31) die Arbeitselektrode (33) hineinreicht, daß der Einlaß (19) über eine Einlaßleitung (17) mit einer Lösungsquelle (11), insbesondere einer analytischen Säule, und der Auslaß (25) über eine Auslaßleitung (22) mit einer Ablaufeinrichtung verbunden ist, daß das Gehäuse (27, 29) einen den Einlaß (19) und den Auslaß (25) aufnehmenden metallischen Gehäuseblock (27, 29) aufweist, und daß die Einlaßleitung (17) bis hin zur Lösungsquelle aus Metall gebildet oder mit Metall beschichtet ist.

11. Elektrochemischer Detektor nach Anspruch 10, dadurch gekennzeichnet, daß die Auslaßleitung (22) aus Metall gebildet oder mit Metall beschichtet ist.

12. Elektrochemischer Detektor nach Anspruch 10 oder 11, dadurch gekennzeichnet, daß die Einlaßleitung (17) und bei Ausbildung nach Anspruch 11 auch die Auslaßleitung (22) aus dem gleichen Metall wie der Gehäuseblock (27, 29) bestehen bzw. mit dem gleichen Metall beschichtet sind.

13. Elektrochemischer Detektor nach Anspruch 11 oder 12, dadurch gekennzeichnet, daß der metallische Gehäuseblock (27, 29) mit der metallischen Einlaßleitung (17) und der metallischen Auslaßleitung (22) als Hilfselektrode dient, mittels welcher der Elektrolytlösung ein Bezugspotential gegeben wird.

14. Elektrochemischer Detektor nach einem der Ansprüche 7 bis 13, wobei die Lösungsquelle einen mit der Elektrolytlösung in Kontakt befindlichen Metallkörper aufweist, dadurch gekennzeichnet, daß die metallische Einlaßleitung (17) mit dem Metallkörper elektrisch verbunden ist.

15. Elektrochemischer Detektor nach einem der Ansprüche 7 bis 14, wobei die Lösungsquelle ein metallisches Gehäuse aufweist, dadurch gekennzeichnet, daß die metallische Einlaßleitung (17) mit dem metallischen Gehäuse elektrisch verbunden ist.

16. Elektrochemischer Detektor nach einem der Ansprüche 10 bis 15, dadurch gekennzeichnet,

daß der Lösungsströmungsraum (31) von zwei Gehäuseteilen (27, 29) begrenzt wird,

daß durch das eine Gehäuseteil (29) die Arbeitselektrode (33) in den Lösungsströmungsraum (31) hineinreicht und der Einlaß (19) der Auslaß (25) und eine Öffnung (37) für die Meßelektrode (15) in dem anderen Gehäuseteil (27) gebildet sind,

und daß das den Einlaß (19) den Auslaß (25) und die Meßelektrodenöffnung (37) aufweisende Gehäuseteil aus einem einstückigen Metallblock (27) gebildet ist.

17. Elektrochemischer Detektor nach einem der Ansprüche 10 bis 15, dadurch gekennzeichnet,

daß der Lösungsströmungsraum (31) von zwei Gehäuseteilen (27, 29) begrenzt wird,

daß das eine Gehäuseteil (29) den Einlaß (19) und den Auslaß (25) und das andere Gehäuseteil (27) die Öffnungen für die Arbeitselektrode (33) und die Meßelektrode (15) aufweist,

und daß das eine Gehäuseteil (29) aus einem einstückigen Metallblock gebildet ist.

18. Elektrochemischer Detektor nach Anspruch 16 oder 17, dadurch gekennzeichnet, daß beide Gehäuseteile (27, 29) aus Metall bestehen, wobei die Arbeitselektrode (33) in den sie aufnehmenden Gehäuseteil (27; 29) isoliert eingebettet ist.

19. Elektrochemischer Detektor nach Anspruch 18, dadurch gekennzeichnet, daß beide Gehäuseteile (27, 29) aus dem gleichen Metall bestehen.

20. Elektrochemischer Detektor nach Anspruch 18 oder 19, dadurch gekennzeichnet, daß die Arbeitselektrode (33) einschließlich ihrer Zuleitung mit einer Abschirmung versehen ist.

21. Elektrochemischer Detektor nach Anspruch 20, dadurch gekennzeichnet, daß die Meßelektrode (15) einschließlich ihrer Zuleitung mit einer Abschirmung versehen ist.

**Claims**

1. A method for electrochemical detection of substances contained in electrolytic solutions by means of an electrochemical detector having a detector cell (13) comprising an inlet (19) and an outlet (25) for an electrolytic solution, a working electrode (33) which is in contact with the electrolytic solution flowing through a solution flow space (31), and a counter-electrode arrangement (15) by means of which a potential difference required for the electrolysis is adjusted between the working electrode (33) and the electrolytic solution, with the instantaneous electric potential value of the electrolytic solution in the local region of the working electrode (33) being measured by means of the counter-electrode arrangement (15) and the electrolysis current generated at the working electrode being taken off as detection measurement value, characterized in that the working electrode potential is controlled to the potential difference required for the electrolysis with respect to the measured instantaneous potential value of the electrolytic solution.

2. A method according to claim 1, characterized in that a potential corresponding to the potential difference required for the electrolysis is superimposed on the measured instantaneous potential value of the electrolytic solution, and in that the potential resulting from the superimposition is impressed on the working electrode (33).

3. An electrochemical detector having a detector cell (13) comprising an inlet (19) and an outlet (25) for an electrolytic solution, and comprising a working electrode (33) which is in contact with the electrolytic solution flowing through a solution flow space (31), a counter-electrode arrangement (15) by means of which the instantaneous electric potential value of the electrolytic solution is measured in the local region of the working electrode (33) and an electric potential difference can be adjusted between the electrolytic solution and the working electrode (33), said potential difference being capable of effecting the electrolysis of the substance to be detected and contained in the electrolytic solution flowing past the working electrode (33), said detector comprising an electrical circuit (41, 43, 45) for adjusting the potential difference between the working electrode (33) and the electrolytic solution, required for the electrolysis, and an electrical measuring circuit for measuring the electrolytic current generated at the working electrode (33), for performing the method according to claim 1, characterized in that the counter-electrode arrangement (15) is connected to a first input (E1) of a summing circuit (43) which has a second input (E2) connected to the output of a voltage source (45) which delivers a voltage corresponding to the potential difference required for the electrolysis and the output of which is connected to the working electrode (33)

4. An electrochemical detector according to claim 3, characterized in that the output of the summing circuit (43) is connected to the working electrode (33) via a current measuring means (47, R).

5. An electrochemical detector according to claim 4, characterized in that the output of the summing circuit (43) is connected to the non-inverting input of an operational amplifier (47) the inverting input of which is connected on the one hand to the working electrode (33) and on the other hand to the output of the operational amplifier (47) via a feedback resistor (R), and in that the output signal of the operational amplifer (47) can be taken off as detection measurement voltage.

6. An electrochemical detector according to any one of claims 3 to 5, characterized in that the summing circuit is formed by a differential amplifier the non-inverting input of which is connected to the counter-electrode arrangement (15) and which is designed for an offset voltage corresponding to the potential difference between the working electrode (33) and the electrolytic solution, required for the electrolysis.

7. An electrochemical detector according to claim 6, characterized in that the operational amplifier is formed by the differential amplifier (47).

8. An electrochemical detector according to any one of claims 3 to 7, characterized in that an impedance transformer (41) is interconnected between the counter-electrode arrangement (15) and the summing circuit (43).

9. An electrochemical detector according to any one of claims 3 to 8, characterized in that the counter-electrode arrangement comprises an auxiliary electrode (17, 22, 27) and a measuring electrode (15), that a reference potential for the electrolytic solution can be applied to the auxiliary electrode (17, 22, 27), and in that the measuring electrode (15) is connected to the summing circuit (43).

10. An electrochemical detector according to any one of claims 3 to 9, characterized in that the detector cell is formed by a housing (27, 29) which is provided with the solution flow space (31) and comprises an inlet (19) and an outlet (25) which communicate with the solution flow space (31), with the working electrode (33) extending into the solution flow space (31) of the housing (27, 29), that the inlet (19) is connected to a solution source (11), in particular an analytical column, via an inlet line (17) and the outlet (25) is connected to a discharge means via an outlet line (22), that the housing (27, 29) comprises a metallic housing block (27, 29) accommodating the inlet (19) and the outlet (25), and in that the inlet line (17) is formed of metal or coated with metal up to the solution source.

11. An electrochemical detector according to claim 10, chararacterized in that the outlet line (22) is formed of metal or coated with metal.

12. An electrochemical detector according to claim 10 or 11, characterized in that the inlet line (17) and, in the embodiment according to claim 11, also the outlet line (22) consist of the same metal as the housing block (27, 29) or are coated with the same metal as the housing block (27, 29).

13. An electrochemical detector according to claim 11 or 12, characterized in that the metallic housing block (27, 29) with the metallic inlet line (17) and the metallic outlet line (22) serves as auxiliary electrode by means of which a reference potential is applied to the electrolytic solution.

14. An electrochemical detector according to anyone of claims 7 to 13, with the solution source having a metallic body in contact with the electrolytic solution, characterized in that the metallic inlet line (17) is electrically connected to the metallic body.

15. An electrochemical detector according to any one of claims 7 to 14, with the solution source having a metallic housing, characterized in that the metallic inlet line (17) is electrically connected to the metallic housing.

16. An electrochemical detector according to any one of claims 10 to 15, characterized in that the solution flow space (31) is confined by two housing parts (27, 29), that the working electrode (33) extends through one housing part (29) into the solution flow space (31), and the inlet (19), the outlet (25) and an opening (37) for the measuring electrode (15) are formed in the other housing part (27), and in that the housing part comprising the inlet (19), the outlet (25) and the measuring electrode opening (37) is formed of a one-piece metal block (27).

17. An electrochemical detector according to any one of claims 10 to 15, characterized in that the solution flow space (31) is confined by two housing parts (27, 29), that one housing part (29) comprises the inlet (19) and the outlet (25) and the other housing part (27) comprises the openings for the working electrode (33) and the measuring electrode (15), and in that said one housing part (29) is formed of a one-piece metal block.

18. An electrochemical detector according to claim 16 or 17, characterized in that both housing parts (27, 29) consist of metal, with the working electrode (33) being embedded in insulated manner in the housing part (27; 29) accommodating said working electrode (33).

19. An electrochemical detector according to claim 18, characterized in that both housing parts (27, 29) consist of the same metal.

20. An electrochemical detector according to claim 18 or 19, characterized in that the working electrode (33), inclusive of its lead, is provided with a shielding.

21. An electrochemical detector according to claim 20, characterized in that the measuring electrode (15), inclusive of its lead, is provided with a shielding.

## Revendications

1. Procédé pour la détection électrochimique de substances contenues dans des solutions d'électrolyte à l'aide d'un détecteur électrochimique qui présente une cellule (13) de détecteur comportant une entrée (19) et une sortie (25) pour une solution d'électrolyte, comportant aussi une électrode de travail (33) qui se trouve en contact avec la solution d'électrolyte qui s'écoule à travers la chambre (31) d'écoulement de la solution, et comportant aussi un dispositif de contre-électrode (15) à l'aide duquel on prescrit une différence de potentiel nécessaire pour l'électrolyse entre l'électrode de travail (33) et la solution d'électrolyte, étant précisé que l'on mesure la valeur instantanée du potentiel électrique de la solution d'électrolyte au voisinage de l'électrode de travail (33), à l'aide du dispositif de contre-électrode (15), et que l'on saisit comme valeur de mesure de la détection le courant d'électrolyse qui apparait à l'électrode de travail, caractérisé en ce que l'on pilote le potentiel de l'électrode de travail en se basant sur la différence de potentiel, nécessaire pour l'électrolyse, avec la valeur instantanée mesurée du potentiel de la solution d'électrolyte.

2. Procédé selon la revendication 1, caractérisé en ce qu'à la valeur instantanée mesurée du potentiel de la solution d'électrolyte on superpose un potentiel correspondant à la différence de potentiel nécessaire pour l'électrolyse et en ce que l'on met l'électrode de travail (33) au potentiel résultant de la superposition.

3. Détecteur électrochimique comportant une cellule (13) de détecteur qui présente une entrée (19) et une sortie (25) pour une solution d'électrolyte, qui présente aussi une électrode de travail (33) qui se trouve en contact avec la solution d'électrolyte qui s'écoule à travers une chambre (31) d'écoulement de la solution, qui présente aussi un dispositif (15) de contre-électrode avec l'aide duquel on mesure la valeur instantanée du potentiel électrique de la solution d'électrolyte au voisinage de l'électrode de travail (33) et on peut prescrire, entre la solution d'électrolyte et, l'électrode de travail (33), une différence de potentiel électrique qui peut opérer l'électrolyse de la substance à détecter qui se trouve dans la solution d'électrolyte qui s'écoule devant l'électrode de travail (33), détecteur électrochimique comportant aussi un circuit électrique (41, 43, 45) pour prescrire la différence de potentiel, nécessaire pour l'électrolyse, entre l'électrode de travail (33) et la solution d'électrolyte, et comportant aussi un circuit de mesure électrique pour mesurer le courant d'électrolyse qui apparait à l'électrode de travail (33), pour l'exécution du procédé selon la revendication 1, caractérisé en ce que le dispositif de contre-électrode (15) est relié à une première sortie (E1) d'un circuit d'addition (43) qui présente une seconde entrée (E2) qui est reliée à la sortie d'une source de tension (45) qui fournit une tension correspondant à la différence de potentiel nécessaire pour l'électrolyse, et dont la sortie est reliée avec l'électrode de travail (33).

4. Détecteur électrochimique selon la revendication 3, caractérisé en ce que la sortie du circuit d'addition (43) est reliée avec l'électrode de travail (33) par l'intermédiaire d'une installation de mesure du courant (47, R).

5. Détecteur électrochimique selon la revendication 4, caractérisé en ce que la sortie du circuit d'addition (43) est reliée à l'entrée de non-inversion d'un amplificateur opérationnel (47) dont l'entrée d'inversion est reliée d'une part avec l'électrode de travail (33) et d'autre part, par l'intermédiaire d'une résistance de rétrocouplage (R), à la sortie de l'amplificateur opérationnel (47); et en ce que le signal de sortie de l'amplicateur opérationnel (47) peut être saisi comme tension de mesure de la détection.

6. Détecteur électrochimique selon l'une des revendications 3 à 5, caractérisé en ce que le circuit d'addition est constitué d'un amplificateur différentiel dont l'entrée de non-inversion est reliée avec le dispositif de contre-électrode (15) et qui est dimensionné pour avoir une tension résiduelle à l'entrée (tension d'offset) égale à la différence de potentiel, nécessaire pour l'électrolyse, entre l'électrode de travail (33) et la solution d'électrolyte.

7. Détecteur électrochimique selon la revendication 6, caractérisé en ce que l'amplificateur opérationnel est constitué de l'amplificateur différentiel (47).

8. Détecteur électrochimique selon l'une des revendications 3 à 7, caractérisé en ce qu'un convertisseur d'impédance (41) est monté entre le dispositif de contre-électrode (15) et le circuit d'addition (43).

9. Détecteur électrochimique selon l'une des revendications 3 à 8, caractérisé en ce que le dispositif de contre-électrode présente une électrode auxiliaire (17, 22, 27) et une électrode de mesure (15); en ce que l'électrode auxiliaire (17, 22, 27) peut être amenée à un potentiel de référence pour la solution d'électrolyte; et en ce que l'électrode de mesure (15) est reliée avec le circuit d'addition (43).

10. Détecteur électrochimique selon l'une des revendications 3 à 9, caractérisé en ce que la cellule de détecteur est formée par un boîtier (27, 29) qui contient la chambre (31) d'écoulement de la solution et qui présente une entrée (19) et une sortie (25) qui sont reliées avec la chambre (31) d'écoulement de la solution et dans la chambre (31) d'écoulement de la solution duquel pénètre l'électrode de travail (33);

en ce que l'entrée (19) est reliée, par l'intermédiaire d'une conduite d'entrée (17), avec une source de solution (11), en particulier une colonne analytique, et que la sortie (25) est reliée, par l'intermédiaire d'une conduite de sortie (22), avec un dispositif d'évacuation;

en ce que le carter (27, 29) présente un bloc métallique de carter (27, 29) dans lequel se trouvent l'entrée (19) et la sortie (25);

et en ce que la conduite d'entrée (17), jusqu'à la source de solution, est en métal ou revêtue de métal.

11. Détecteur électrochimique selon la revendication 10, caractérisé en ce que la conduite de sortie (22) est en métal ou est revêtue de métal.

12. Détecteur électrochimique selon la revendication 10 ou 11, caractérisé en ce que la conduite d'entrée (17) et, lors de la conception selon la revendication 11, également la conduite de sortie (22), sont constituées du même métal que le bloc de carter (27, 29), ou revêtues de ce même métal.

13. Détecteur électrochimique selon la revendication 11 ou 12, caractérisé en ce que le bloc métallique de carter (27, 29) sert, avec la conduite métallique d'entrée (17) et la conduite métallique de sortie (22), d'électrode auxiliaire au moyen de laquelle on amène un potentiel de référence à la solution d'électrolyte.

14. Détecteur électrochimique selon les revendications 7 à 13, dans lequel la source de solution présente un corps métallique qui se trouve en contact avec la solution d'électrolyte, caractérisé en ce que la conduite métallique d'entrée (17) est reliée électriquement avec le corps métallique.

15. Détecteur électrochimique selon l'une des revendications 7 à 14, dans lequel la source de solution présente un boîtier métallique, caractérisé en ce que la conduite métallique d'entrée (17) est reliée électriquement avec le boîtier métallique.

16. Détecteur électrochimique selon l'une des revendications 10 à 15, caractérisé

en ce que la chambre (31) d'écoulement de la solution est limitée par deux parties (27, 29) du boîtier;

en ce que l'électrode de travail (33) pénètre, à travers la première partie (29) du boîtier, dans la chambre (31) d'écoulement de la solution et que l'entrée (19), la sortie (25) et une ouverture (37) pour l'électrode de mesure (15) sont formées dans l'autre partie (27) du boîtier;

et en ce que la partie du boîtier qui présente l'entrée (19), la sortie (25) et l'ouverture (37) pour l'électrode de mesure est formée d'un bloc métallique (27) d'une seule pièce.

17. Détecteur électrochimique selon l'une des revendications 10 à 15, caractérise en ce que la chambre (31) d'écoulement de la solution est limitée par deux parties (27, 29) de boîtier;

en ce que la première partie (29) du boîtier présente l'entrée (19) et la sortie (25) et en ce que l'autre partie (27) du boîtier présente les ouvertures pour l'électrode de travail (33) et pour l'électrode de mesure (15);

et en ce que la première partie du boîtier (29) est formée d'un bloc de métal d'une seule pièce.

18. Détecteur électrochimique selon la revendication 16 ou 17, caractérisé en ce que les deux parties (27, 29) du boîtier sont en métal, étant précisé que l'électrode de travail (33) est encastrée, isolée, dans la partie (27; 29) du boitier qui la loge.

19. Détecteur électrochimique selon la revendication 18, caractérisé en ce que les deux parties (27, 29) du boîtier sont en le même métal.

20. Détecteur électrochimique selon la revendication 18 ou 19 , caractérisé en ce que l'électrode de travail (33), y compris son conducteur d'amenée, est munie d'un blindage.

21. Détecteur électrochimique selon la revendication 20, caractérisé en ce que l'électrode de mesure (15) y compris son conducteur d'amenée, est munie d'un blindage.

FIG. 1

FIG. 2

Metall

FIG. 3

11

35

15

27

33

31

29

19

13

25

Metall

17

22

FIG. 4

FIG. 5

5 pA

51

(2)

(3)

52

1,5 pA

1 min